# EUROPÄISCHE PATENTSCHRIFT

(11) **EP 0 641 846 B1**
(45) Veröffentlichungstag und Bekanntmachung des Hinweises auf die Patenterteilung: **27.12.1996**
(21) Anmeldenummer: 94112629.4
(22) Anmeldetag: 12.08.1994
(51) Int. Cl.: C09J 4/06, C08F 255/02, C08F 279/02, C09D 4/06

(54) **Durch radikalische Polymerisation aushärtende, geruchsarme (Meth-)acrylatzubereitungen und ihre Verwendung**
Odorless (meth)acrylate preparation curable by radical polymerisation
Préparations à base de (méth)acrylate inodores durcissant par polymérisation radicalaire

(30) Priorität: 27.08.1993 DE 4328960
(43) Veröffentlichungstag der Anmeldung: 08.03.1995
(73) Patentinhaber: THERA Patent GmbH & Co. KG Gesellschaft für industrielle Schutzrechte, D-82229 Seefeld (DE)
(72) Erfinder: Eckhardt, Gunther, Dr., D-82346 Frieding (DE)
(74) Vertreter: Bunke, Holger, Dr.rer.nat. Dipl.-Chem.

(56) Entgegenhaltungen:
- Keine einschlägigen Dokumente gefunden
- Keine

## Beschreibung

Gegenstand der vorliegenden Erfindung sind durch radikalische Polymerisation aushärtende, geruchsarme (Meth-)acrylatzubereitungen und ihre Verwendung zum Verkleben, Abdichten, Vergießen und Beschichten von Substraten, insbesondere zum Verkleben von Metall/Metall-, Kunststoff/Kunststoff- und Metall/Kunststoff-Substraten.

Solche durch radikalische Polymerisation aushärtende (Meth-) acrylatzubereitungen sind seit langer Zeit bekannt.

So beschreibt die DE-PS 899 244 ein Kleb- und Haftmittel, bestehend im wesentlichen aus Lösungen bzw. Anquellungen von hochmolekularen Stoffen in Polymerisationsfähigen Verbindungen, das neben den üblichen Polymerisationskatalysatoren, wie Benzoylperoxid, noch tertiäre Amine, wie Dimethylanilin, enthält, wobei das Benzoylperoxid kurz vor dem Gebrauch des Kleb- und Haftmittels zugesetzt wird.

Als polymerisationsfähige Stoffe werden Methacrylsäureester wie Methylmethacrylat, Acrylsäureester, Vinylacetat, Styrol, Vinylmethylketon, Acrolein, Acrylnitril, Isobuten sowie chlorierte Butadiene und als hochmolekulare Stoffe Ester der Cellulose, Polymethylmethacrylat, Polyvinylverbindungen, Polystyrol, Polyisobuten, Kautschuk, Polyamide, tierischer Leim und Dextrine genannt.

In der DE-PS 974 919 werden Kitte und Klebstoffe, im wesentlichen bestehend aus einer Mischung polymerisationsfähiger Monomerer, beschrieben, die sich durch einen Gehalt von bis zu 15 Masseprozent Polychloropren auszeichnen. In dieser Patentschrift werden auch der Einsatz von bis zu 5 Masseprozent der Ester der Fumarsäure oder der Maleinsäure, von bis zu 10 Masseprozent der Ester mehrwertiger, gebenenfalls ungesättigter Alkohole mit mehrbasischen, gegebenenfalls ungesättigten Carbonsäuren vorgeschlagen und in den Patentbeispielen die Anwendung von N,N-Bis(2-hydroxyethyl)-p-toluidin und N,N-Bis(2-hydroxypropyl)-p-toluidin und Acrylsäure erwähnt.

Eine besondere Bedeutung für die Verarbeitungseigenschaften der durch radikalische Polymerisation aushärtenden Lösung und die mechanisch-dynamische Belastbarkeit des sich durch Aushärtung bildenden Films besitzen die Hochpolymeren, die in einem Gemisch von (Meth-)acrylatmonomeren gelöst werden. Für (Meth-)acrylatzubereitungen hat sich der Einsatz von sulfochlorierten Polyethylenen bewährt. Mit Hochpolymeren diesen Typs werden Klebstoffzubereitungen formuliert, welche zu Klebverbindungen verarbeitet werden können, die sich durch hohe Zugscherfestigkeiten und auch durch gute Schälfestigkeiten der Verklebung auszeichnen.

In der US-PS 3 591 438 wird eine polymerisierbare (Meth-) acrylatzubereitung vorgeschlagen, die aus einer Lösung von sulfochloriertem Polyethylen und einem Bindungsbeschleuniger besteht, wobei die Lösung ein polymerisierbares (Meth-)acrylatmonomer und einen peroxidischen Polymerisationsinitiator enthält, während der Bindungsbeschleuniger aus einem Amin/Aldehyd-Kondensationsprodukt und einem reduzierenden Aktivator gebildet wird.

Gemäß der US-PS 3 890 407 wird ein Klebstoffsystem beschrieben, das sowohl als 2-Komponenten-System als auch als Klebstoff mit einem Primer formuliert werden kann. Die Klebstoffzubereitung ist hierbei eine Lösung von einer schwefelhaltigen Verbindung wie sulfochloriertes Polyethylen und bzw. oder einer Mischung von Sulfonylchlorid mit chloriertem Polyethylen in einem polymerisierbaren Vinylmonomeren oder in einer Mischung von Monomeren sowie mit einem Polymerisationskatalysator. Dabei kann die schwefelhaltige Verbindung 25 bis 70 Masseprozent Chlor und 3 bis 160 mMol Sulfonylchlorid je 100 g des Polymeren enthalten. Das zur Chlorierung und Sulfochlorierung verwendete Polyethylen besitzt einen Schmelzindex von 4 bis 500 g je 10 Minuten bei 190°C. Neben dem Homopolymeren können auch Copolymere des Ethylens mit kleinen Anteilen Propen oder von anderen Olefinen eingesetzt werden.

Wegen einiger Nachteile des Einsatzes von sulfochlorierten Polyethylenen, wie beispielsweise der begrenzten Wärmestabilität, ist bereits vorgeschlagen worden, dieses Elastomer durch andere Hochpolymere wie Acrylnitril/Butadien-Mischpolymere, aber auch Pfropf- und Blockcopolymere zu ersetzen.

So beschreibt die EP-A-0 087 304 die Herstellung und den Einsatz von speziellen Blockcopolymeren aus verschiedenen Acrylmonomeren, Styrol und geringen Anteilen Divinylverbindungen für die Herstellung von (Meth-)acrylatklebstoffen.

Der Einsatz von gepfropften sulfochlorierten Polyethylenen für diesen Zweck ist ebenfalls bekannt.

Beispielsweise beschreibt die US-PS 3 594 451 ein Pfropfcopolymer eines amorphen, homogen sulfochlorierten Polyethylens, wobei die Masse der aufgepfropften Seitenzweige 10 bis 40 Prozent des sulfochlorierten Polyethylens beträgt.

Bei Verklebungen und Abdichtungen besteht eine wichtige Forderung an das Klebstoffsystem darin, daß es im gesamten Bereich der technisch genutzten Verklebungstemperaturen, d.h. im Temperaturbereich von 0°C bis +40°C, eine weitgehende Unabhängigkeit der Verarbeitungsergebnisse von den Verarbeitungstemperaturen besitzen soll.

Hierbei erweisen sich die bisher vorgeschlagenen Systeme als nur bedingt geeignet.

Ein weiteres Problem der bekannten Systeme besteht darin, daß als Monomethacrylat mit guten Löseeigenschaften meist Methylmethacrylat verwendet wird, das besonders unangenehm riecht.

Klebstoffe auf der Grundlage von Methylmethacrylat ergeben zwar ausgehärtete Filme mit sehr guten mechanischen Eigenschaften, sind jedoch nachteilig wegen des relativ hohen Dampfdruckes dieses Monomeren bei Raumtemperatur und wegen der starken Geruchsbelästigung während der Verarbeitung sowie wegen der Verdunstung des Monomeren nach dem Klebstoffauftrag, was die Gefahr der Adhäsionsverminderung durch Hautbildung mit sich bringt.

Im allgemeinen erweist es sich als sehr schwierig, ein Monomerengemisch auszuwählen, das sich durch einen geringen Geruch, geringe Entflammbarkeit und Toxizität auszeichnet, aber andererseits den gewünschten Lösezustand der sulfochlorierten Polyethylene oder der Acrylnitril/Butadien-Copolymere einzustellen gestattet und bei der Klebstoffanwendung zu Klebverbindungen hoher Festigkeit führt.

Es gibt eine Reihe von Vorschlägen, wonach zur Herstellung von durch radikalische Polymerisation aushärtenden Lösungen von sulfochlorierten Polyethylenen bzw. von Acrylnitril/ Butadien-Copolymeren Gemische von (Meth-)acrylatmonomeren eingesetzt werden sollen, um den gewünschten Kompromiß von Eigenschaften zu erreichen.

Mit dem Ziel der Verringerung der Geruchsbelästigung werden deshalb monofunktionelle (Meth-)acrylate aus den Substanzgruppen der
- Alkyl(meth-)acrylate, einschließlich der Cycloalkyl(meth-)acrylate
- der Aralkyl(meth-)acrylate und
- 2-Hydroxyalkyl(meth-)acrylate
wie z.B.
2-Ethylhexyl(meth-)acrylat, Lauryl(meth-)acrylat, Cyclohexyl(meth-)acrylat, Isobornyl(meth-)acrylat, Dihydrodicyclopentadienyl(meth-)acrylat, 3-Cyclohexylpropyl(meth-)acrylat, Benzyl(meth-)acrylat, 2-Phenylethyl(meth-)acrylat, 3-Phenylpropyl(meth-)acrylat, 2-Hydroxyethyl(meth-)acrylat, 2-Hydroxypropyl(meth-)acrylat,
eingesetzt, wobei die Methacrylate gegenüber den Acrylaten meist bevorzugt sind.

In der EP-A-0 087 304 wird eine Lösung vorgeschlagen, die aus einem speziellen Blockcopolymeren in einem Monomerengemisch besteht, dessen Einzelmonomere einen Flammpunkt über 95°C und eine Glasübergangstemperatur der entsprechenden Homopolymerisate im Bereich von 0°C bis 100°C haben. Typische Monomere, die diese Forderungen erfüllen, sind: Dicyclopentenyloxyethylmethacrylat und Isodecylmethacrylat.

Allerdings führt die ausschließliche Anwendung der oben aufgeführten Monomeren zu einem starken Abfall der mechanischen Eigenschaften der ausgehärteten Zubereitungen.

Die DE-A-18 17 716 beschreibt Acrylate und Methacrylate der allgemeinen Formel 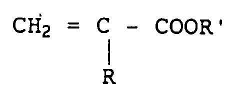 worin R = H oder Methyl bedeutet und
R' ein geradkettiger oder verzweigter Alkylrest mit 2 bis 6 C-Atomen ist, der durch 1 bis 5 mindestens teilweise durch niedrige Acylgruppen geschützte Hydroxygruppen substituiert ist und der durch 1 oder 2 Sauerstoffatome unterbrochen sein kann.

Typische Verbindungen dieser Klasse sind beispielsweise 2-Acetoxyethylacrylat und -methacrylat oder Pentaerythrittriacetat-monoacrylat und -methacrylat, die zur Herstellung von Gelen für die Chromatographie verwendet werden.

In der JP-Patentveröffentlichung 76-39809 werden Metallklebstoffe beschrieben, die durch Auflösen von unvulkanisiertem synthetischem Kautschuk in Monomeren der allgemeinen Formel 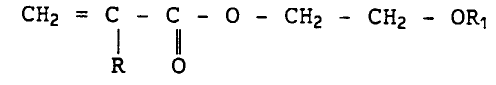
- worin R =: H oder Methyl und
- R₁ =: Alkyl, Aryl oder Acyl bedeuten,
erhalten werden. Beispielsweise werden 20 Teile Nitrilkautschuk in 80 Teilen 2-Acetoxyethylmethacrylat aufgelöst. Klebstoffe auf der Grundlage einer solchen Lösung zeigen eine starke Abhängigkeit der Verbundfestigkeit von der Temperatur der Verklebung. Außerdem werden nur vergleichsweise niedrige Festigkeitswerte erreicht.

Mit dem Ziel, in den Zubereitungen den Einsatz von leichtflüchtigen Säuremonomeren zu vermeiden, wurden zahlreiche Vorschläge gemacht.

So ist die Anwendung von Umsetzungsprodukten der Phosphorsäure mit 2-Hydroxyalkyl(meth-)acrylaten bekannt.

Vorgeschlagen werden sowohl die Umsetzungsprodukte von 1 Mol Phosphorsäure mit 1 Mol 2-Hydroxyalkyl(meth-)acrylat als auch Umsetzungsprodukte von 1 Mol Phosphorsäure mit 2 oder 3 Molen 2-Hydroxyalkylmethacrylat, also beispielsweise 2-Acryloyloxyethylphosphat, 2-Methacryloyloxyethylphosphat, Bis-2-acryloyloxyethylphosphat, Bis-2-methacryloyloxyethylphosphat, Tris-2-acryloyloxyethylphosphat, Tris-2-methacryloyloxyethylphosphat.

Bei der Anwendung dieser Umsetzungsprodukte erweist sich die nur begrenzte Verträglichkeit mit Kautschuklösungen als problematisch, so daß die gewünschte Acidität der Zubereitungen nicht allein durch diese Monomeren eingestellt werden kann.

In der EP-A-0 087 304 werden als Säuremonomere Verbindungen der allgemeinen Formel 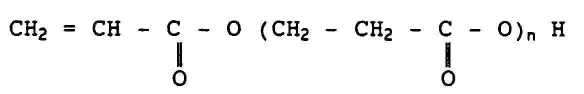 vorgeschlagen, wie beispielsweise Acryloyloxypropionsäure, die einen Flammpunkt über 95°C besitzen. Mit diesem Säuremonomer gelingt es zwar, eine ausreichend hohe Acidität der Zubereitung zu erreichen, jedoch fallen die mechanischen Eigenschaften des ausgehärteten Films stark ab.

Den bisher vorgeschlagenen Lösungen ist gemeinsam, daß sie jeweils nur einen Teil der spezifischen Anforderungen befriedigend erfüllen, während andere wichtige Eigenschaften nur unzureichend sind. So gelingt es durchaus, ein Monomerengemisch auszuwählen, dessen Komponenten sich durch einen niedrigen Dampfdruck und geringe Toxizität auszeichnen, die weitergehenden Forderungen nach ausreichender Lösekraft gegenüber den Polymeren und nach einer Temperaturunempfindlichkeit der Verarbeitungsergebnisse im Bereich von 0 bis +40°C werden jedoch von den vorgeschlagenen Lösungen nur unvollkommen oder überhaupt nicht erfüllt.

Der Erfindung liegt deshalb die Aufgabe zugrunde, eine Zubereitung der eingangs genannten Gattung bereitzustellen, die zu einer guten Kälteflexibilität des Klebfilmes führt und deren Verarbeitungsergebnisse im Bereich von 0 bis 40°C weitgehend temperaturunabhängig sind und die zu Klebfestigkeiten von mindestens 15 N/mm² führen und weitgehend ohne Geruchsbelästigung verarbeitet werden können.

Diese Aufgabe wird erfindungsgemäß gelöst durch eine durch radikalische Polymerisation aushärtende (Meth-)acrylatzubereitung aus (Meth-)acrylatmonomeren, Polymeren sowie gegebenenfalls Initiierungssystemen, weiteren Modifikatoren und Hilfsstoffen, die dadurch gekennzeichnet ist,
- daß die Zubereitung mindestens zwei Polymere umfaßt, die in einem Monomerengemisch, das ein Lösemittel für die Polymeren darstellt, gelöst sind,
- daß die jeweils mindestens zwei Polymere entweder aus der Gruppe der sulfochlorierten Polyethylene oder aus der Gruppe der Acrylnitril/Butadien-Copolymere ausgewählt und die aus der jeweiligen Gruppe ausgewählten Polymere einander ähnlich sind, wobei der Anteil jedes ausgewählten Polymers mindestens 10% der in dem Lösemittel aufzulösenden Gesamtpolymermenge ausmacht,
- und daß das Monomerengemisch, bezogen auf jeweils 100 Masseteile der Zubereitung,
   (A) 10 bis 70 Masseteile eines oder mehrerer Ester(meth-) acrylate der allgemeinen Formel (I): 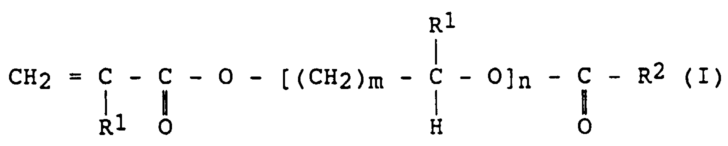 worin
      - R¹ =: H, CH₃
      - R² =: Alkyl, Cycloalkyl, Alkaryl
      - n =: eine ganze Zahl von 1 - 12
      - m =: eine ganze Zahl von 1 - 5
      bedeuten;
      sowie
   (B) 1 bis 20 Masseteile von Säuremonomeren der allgemeinen Formel (II): 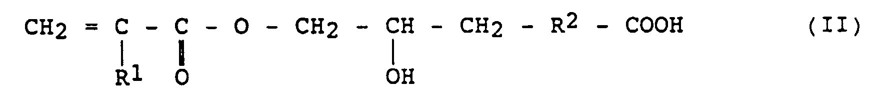 worin R¹ = H, CH₃ 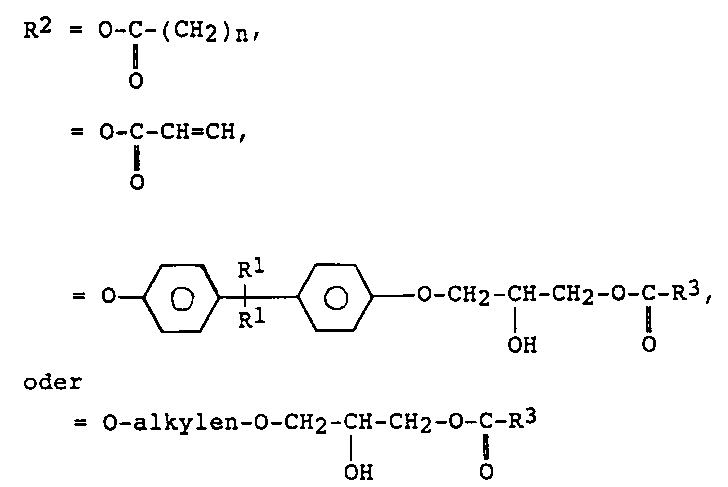
      - n =: eine ganze Zahl von 1 - 12,
      - R³ =: Alkylen, Arylen
      bedeuten,
      umfaßt.
      Das Monomerengemisch kann bei der erfindungsemäßen Zubereitung zusätzlich ggf. enthalten (jeweils bezogen auf 100 Masseteile der Zubereitung):
   (C) 1 bis 50 Masseteile eines oder mehrerer Urethan(meth-) acrylate der allgemeinen Formel (III): 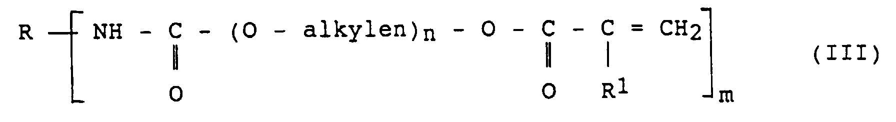 worin
      - R: ein ein- bis vierwertiger, aliphatischer, aromatischer, araliphatischer oder cyclischer Rest,
      - R¹ =: H, CH₃
      - m =: eine ganze Zahl von 1 - 5
      bedeuten, und/oder
      1 bis 50 Masseteile Alkyl- und/oder Aralkyl(meth-)acrylate mit 6 bis 12 C-Atomen im Alkoholrest und/oder Hydroxyalkyl(meth-)acrylate wie Hydroxyethyl(meth)acrylat und Hydroxypropyl(meth)acrylat
      und/oder
   (D) 1 bis 20 Masseteile von weiteren di-, tri- oder tetrafunktionellen (Meth-)acrylatmonomeren mit ggf. alkoxylierten mehrfunktionellen Alkoholkomponenten und/oder von freien (Meth)acrylsäuremonomeren wie Methacrylsäure und Diacrylsäure.

Zur Herstellung der erfindungsgemäßen Zubereitungen können als Polymere kautschukartige Copolymerisate des Butadiens mit Acrylnitril oder sulfochlorierte Polyethylene sowie modifizierte Polymere dieser beiden Gruppen eingesetzt werden.

Nach einer bevorzugten Ausführungsform werden Acrylnitril/Butadien -Copolymerisate verwendet, wobei mindestens zwei verschiedene Copolymere zum Einsatz kommen, die sich in wesentlichen Parametern des Molekülaufbaus wie Acrylnitrilgehalt und/oder Molmasse und/oder funktionelle Gruppen und/oder Art, Länge und Konzentration aufgepfropfter Seitenäste unterscheiden.

Neben Copolymerisation mit einem Acrylnitrilgehalt von 28 bis 35 Masseprozent und Mooney-Viskositäten von 25 bis 90 werden auch Copolymerisate mit höheren oder niedrigeren Acrylnitrilgehalten eingesetzt.

Weiterhin können Pfropfcopolymere auf der Grundlage von Mischpolymerisaten mit einem Acrylnitrilgehalt von 28 bis 35 Masseprozent mit (Meth-)acrylatmonomeren wie beispielsweise Butylacrylat oder 2-Ethylhexylmethacrylat in einer Konzentration von 5 bis 25 Masseprozent der aufgepfropften Seitenäste an der Gesamtmasse des Pfropf-Copolymerisats verwendet werden. Weiterhin ist der Einsatz flüssiger Copolymerisate des Acrylnitrils und Butadiens in einem weiten Bereich des Acrylnitrilgehalts mit funktionellen Gruppen wie Carboxyl-, Amin- und Epoxygruppen möglich, die ganz- oder teilweise in (Meth-)acrylgruppen umgewandelt sein können.

Es können auch carboxylfunktionalisierte hochmolekulare Acrylnitril/Butadien-Copolymerisate zusammen mit nicht funktionalisierten hochmolekularen Acrylnitril/Butadien-Copolymerisaten und/oder flüssigen Copolymerisaten des Butadiens mit Acrylnitril mit funktionellen Gruppen verwendet werden.

Nach einer besonders bevorzugten Ausführungsform der Erfindung werden chlorierte und nachfolgend sulfochlorierte Polyethylene mit einem Chlorgehalt von 25 bis 45 Masseprozent und einem Gehalt von Sulfonylgruppen im Bereich von 0,2 bis 0,5 Mol/kg eingesetzt, die sich in ihrer Molekülstruktur unterscheiden hinsichtlich ihres Gehaltes an Chlor und/oder Sulfonylgruppen und/oder ihrer Molmasse und/oder ihres Gehaltes an Langkettenverzweigungen und/oder Art, Länge und Konzentration aufgepfropfter Seitenäste.

Weitere Ausgestaltungen der Erfindung sind den Ansprüchen 8-10 zu entnehmen. Besonders bevorzugt werden solche sulfochlorierten Polyethylene eingesetzt, deren Ausgangspolyethylene durch radikalische Hochdruckpolymerisation gegebenenfalls in Gegenwart geringer Mengen von Olefinen hergestellt werden, die Langkettenverzweigungen und einen Kurzkettenverzweigungsgrad von 15 bis 40 Kurzkettenverzweigungen je 1000 C-Atome sowie einen Doppelbindungsgehalt von 0,2 bis 1,0 Doppelbindungen je 1000 C-Atome besitzen.

Zur Erreichung des gewünschten Eigenschaftsbildes werden zwei ähnliche, sich jedoch in den Löseeigenschaften unterscheidende modifizierte Hochdruckpolyethylene eingesetzt, wobei der Anteil jedes modifizierten Hochdruckpolyethylens an der aufzulösenden Polymermenge 10 bis 90 Prozent beträgt.

Weiterhin können Pfropfcopolymere auf der Grundlage chlorierter und nachfolgend sulfochlorierter Polyethylene mit (Meth-)acrylatmonomeren wie beispielsweise Butylacrylat, 2-Ethylhexylmethacrylat und Hydroxypropylmethacrylat in einer Konzentration von 2 bis 20 Masseprozent der aufgepfropften Seitenäste an der Gesamtmasse des Pfropf-Copolymerisats verwendet werden.

In einigen Fällen kann es zweckmäßig sein, die meist kautschukartigen Polymeren durch Walzen aufzuarbeiten.

Die erfindungsgemäß einzusetzenden Ester(meth-)acrylate werden aus den entsprechenden Alkoholderivaten durch Umsetzung mit Acylierungsreagenzien wie Säuren, Säureanhydriden und Säurechloriden hergestellt.

Die Acylierung gelingt mit Säureanhydriden wie beispielsweise Acetanhydrid und Propionanhydrid unter katalytischer Wirkung von Pyridin bereits bei mäßig erhöhten Temperaturen in sehr guter Ausbeute.

Geeignete Alkoholkomponenten sind 2-Hydroxyethyl(meth-)acrylat, 2-Hydroxypropyl(meth-)acrylat, Polypropylenglykolmono(meth-)acrylat und Polybutylenglykolmono(meth-)acrylat.

Als Säuremonomere werden erfindungsgemäß vorzugsweise Umsetzungsprodukte von zumindest zweibasischen Säuren mit Glycidyl(meth-)acrylat und/oder von Umsetzungsprodukten der (Meth-)acrylsäure und/oder der Diacrylsäure mit einem Glycidether, der beispielsweise durch Addition eines Diglycidethers mit einer zweibasischen Säure im Molverhältnis 1:1 hergestellt wurde, eingesetzt.

Als zweibasische Säuren können die gesättigten Dicarbonsäuren, z.B. Bernsteinsäure und Adipinsäure, o, m, p-Phthalsäure und deren hydrierte und/oder alkylierte Derivate, sowie Fumar- oder Maleinsäure verwendet werden.

Als Diglycidether können sowohl aliphatische, wie Butandiol-1,4-diglycidether, Hexandiol-1,6-diglycidether und Neopentylglycidether, die Diglycidether des Polyethylenglykols, des Polypropylenglykols, des Polybutylenglykols unterschiedlicher Molmasse, als auch aromatische Diglycidether wie solche vom Bisphenol-A- und Bisphenol-F-Typ verwendet werden.

Bevorzugt werden Maleinsäure-2-hydroxypropoxymethacrylat, Bernsteinsäure-2-hydroxypropoxymethacrylat, Adipinsäure-2-hydroxypropoxymethacrylat und die Umsetzungsprodukte von Butandiol-1,4-diglycidether oder Neopentylglykol-diglycidether mit Fumarsäure, Bernsteinsäure, Adipinsäure und Phthalsäure im Molverhältnis 1:1 mit nachfolgender Addition von Methacrylsäure eingesetzt.

Es werden 1 bis 20 Masseteile der angeführten Verbindungen der Komponente (B) des als Lösemittel verwendeten Monomerengemischs, vorzugsweise 1,5 bis 10 Masseteile, auf jeweils 100 Masseteile der Zubereitung verwendet.

Die gegebenenfalls einzusetzenden Urethan(meth)-acrylate werden durch Addition von 2-Hydroxyalkyl(meth)-acrylaten an geeignete Alkylisocyanate hergestellt. Beispiele für erfindungsgemäß einzusetzende Monourethanmethacrylate sind n-Propyl- und n-Butylurethanethylmethacrylat.

Als vernetzend wirkende Urethan-Monomere oder Praepolymere werden gegebenenfalls Multiurethan(meth-)acrylate wie die Umsetzungsprodukte von Hexamethylendiisocyanat, Trimethylhexylendiisocyanat, Diphenylmethandiisocyanat, Naphthylen-1,5-diisocyanat, Isophorondiisocyanat mit je 2 Mol 2-Hydroxyalkyl(meth)-acrylat verwendet.

Multiurethanmethacrylate können beispielsweise auch durch Umsetzung von je 1 Mol 2-Hydroxyethylmethacrylat und den oben angegebenen Diisocyanaten und in zweiter Stufe mit einem hydroxylgruppenhaltigen Praepolymeren, hergestellt aus Polyolen und Diisocyanaten, synthetisiert werden.

Ein anderer Syntheseweg ist die Umsetzung eines Polyesterpolyols mit einem Diisocyanat im Molverhältnis OH-Gruppen zu Isocyanatgruppen von 1:2 und die weitere Umsetzung dieses Adduktes mit 2-Hydroxyalkyl(meth-)acrylaten.

Weiterhin kann das zur Auflösung der kautschukartigen Polymeren verwendete Monomerengemisch cycloaliphatische Verbindungen wie Isobornyl(meth-)acrylat, Aralkyl(meth-)acrylate wie 2-Phenylethyl(meth-)acrylat und Hydroxyalkyl(meth)acrylate wie 2-Hydroxypropylmethacrylat sowie gegebenenfalls weitere Säuremonomere, wie Methacrylsäure und/oder Diacrylsäure enthalten.

Die erfindungsgemäßen (Meth-)acrylatzubereitungen werden gegen eine unerwünschte vorzeitige Polymerisation durch den Zusatz von phenolischen Verbindungen wie Hydrochinon, Hydrochinonmonoalkylether und/oder 2,6-Ditert.-butyl-4-methylphenol stabilisiert.

Die zur Aushärtung der Zubereitungen erforderliche Radikalbildung kann auf unterschiedlichem Wege erreicht werden.

Unter dem Einfluß von Elektronenstrahlen härten die Zubereitungen ohne weitere Zusätze aus. Die Aushärtung im Bereich des ultravioletten Lichtes und des sichtbaren Lichtes erfordert den Einsatz entsprechend ausgewählter Photoinitiatoren. Die Aushärtung erfolgt vorzugsweise durch Licht im Wellenlängenbereich von 280 bis 600 nm.

Die Radikalbildung kann auch durch übliche Redox-Initiierungssysteme erreicht werden. Hierbei ist eine zweikomponentige Verarbeitung nach einem A/B-Verfahren oder auch nach No-mix-Varianten möglich. Bei einer dieser Varianten werden die Zubereitungen nach Zusatz von tertiären aromatischen Aminen nach dem Peroxidlack-Verfahren verarbeitet, bei einer anderen Variante nach einem Aktivatorverfahren, wobei zuerst Peroxide zugegeben werden.

Ausgewählte Zubereitungen können auch nach Zusatz eines "anaeroben" Initiierungssystems, bestehend aus Cumolhydroperoxid, Saccharin und tertiärem aromatischen Amin, einkomponentig verarbeitet werden.

Die Erfindung wird nachfolgend anhand von Beispielen und Vergleichsbeispielen näher erläutert:

### I. Ausgangsmaterialien

### Herstellung der Ester(meth-)acrylate

### (Komponente (A) des Monomerengemischs)

Die Umsetzung geeigneter Alkohole wie 2-Hydroxyethyl(meth-)acrylat und 2-Hydroxypropyl(meth-)acrylat erfolgte in Gegenwart von Pyridin mit frisch destilliertem Acetanhydrid bei 25 bis 35°C.

Die Reaktion wurde gaschromatographisch verfolgt und war nach 12 Stunden abgeschlossen. Das Reaktionsprodukt wurde mit Wasser gewaschen, getrocknet, mit 500 ppm 2,6-Di-tert.butyl-4-methyl-phenol versetzt und fraktioniert destilliert. Die Reinheit der so hergestellten Ester(meth-)acrylate betrug mindestens 97%.

### Herstellung der Säuremonomeren

### (Komponente (B) des Monomerengemischs)

In einem Reaktionsgefäß mit Be- und Entlüftung (5 l Luft/h je l Reaktionsgefäßvolumen), Rührer und Rückflußkühler wurden bei 110°C unter den in Tabelle 1 chrakterisierten Bedingungen die Säuremonomeren hergestellt. Die Reaktion wurde gaschromatographisch verfolgt und war nach 2 bis 8 Stunden Reaktionszeit beendet.

Bei der Herstellung der Säuremonomeren C, D und E wurde der Diglycidether vorgelegt und Methacrylsäure, stabilisiert mit 1000 ppm 2,6-Di-tert.-butyl-4-methyl-phenol, zugegeben. Nach 2 Stunden Reaktionszeit erfolgte die Zugabe der Dicarbonsäure und Weiterführung der Umsetzung über weitere 4 Stunden.

### Herstellung der Urethan(meth)acrylate

### (Komponente (C) des Monomerengemischs)

Ein käufliches Polyesterpolyol wurde mit Hexamethylendiisocyanat im Molverhältnis OH-Gruppen zu Isocyanatgruppen wie 1:2 und anschließend mit 2-Hydroxyethylmethacrylat bei 50°C innerhalb von 6 Stunden umgesetzt.

Das so erhaltene Methacrylatpraepolymer hatte eine mittlere Molmasse von 1200 g/Mol und eine Doppelbindungsäquivalentmasse von 370.

### II. Beispiele 1 - 8

### Herstellung und Ausprüfung der Klebstofflösungen

Zur Herstellung der Klebstofflösungen gemäß Tabelle 2 wurden die Polymeren mechanisch zerkleinert.

Die Auflösung erfolgte in einem Rührgefäß mit Be- und Entlüftung. Die monofunktionellen (Meth-)acrylate und die Säuremonomeren wurden vorgelegt und die Kautschuke eingebracht.

Die Auflösung wurde bei einer Temperatur von 50°C vorgenommen und war nach 6 bis 24 Stunden beendet.

Der Ansatz wurde nach 24 Stunden noch einmal gemischt und die restlichen Komponenten sowie 50 ppm Hydrochinonmonomethylether zugesetzt.

Die so hergestellten Klebstofflösungen wurden durch die Herstellung von Verklebungen und deren Ausprüfungsergebnisse beurteilt.

Die Verklebungen mit den in Tabelle 2 beschriebenen Klebstofflösungen wurden nach dem A/B-Verfahren ausgeführt. Zur Bereitung der A-Komponente wurde ein Teil der Klebstofflösung mit tertiären aromatischen Aminen versetzt, wobei bei allen Beispielen auf je 100 Masseteile der Klebstofflösung 0,3 Masseteile N,N-Diethylanilin, 0,6 Masseteile N,N-Dimethyl-p-toluidin und 0,8 Masseteile N,N-Bis(2-hydroxyethyl)-p-toluidin eingesetzt wurden.

Die B-Komponenten wurden aus einem Teil der jeweiligen Klebstofflösungen und Benzoylperoxid hergestellt, wobei bei allen Klebstofflösungen gemäß Tabelle 2 6 Masseteile einer 60%-igen Benzoylperoxidpaste in Dibutylphthalat auf je 100 Masseteile der Klebstofflösung eingesetzt wurden.

Zur Eigenschaftsermittlung wurden Verklebungen mit Al-Blechen ausgeführt. Die A- und die B-Komponenten wurden jeweils getrennt in dünner Schicht auf das Al-Blech aufgetragen, die Bleche sofort mit einer Überlappung von 12 mm gefügt und die Klebstelle mit einer Belastung von 5N fixiert.

Die Ergebnisse der Ausprüfungen sind in Tabelle 3 zusammengestellt.

Die Klebstoffe gemäß Patentbeispielen 1 bis 8 zeichneten sich durch einen geringen Geruch und eine geringe Reizwirkung aus.

Es ließen sich im A/B-Verfahren Klebverbindungen mit mittlerer bis hoher Festigkeit herstellen, wobei im untersuchten Temperaturbereich keine Abhängigkeit der Klebfestigkeiten von der Verklebtemperatur festzustellen war.

Die Klebfilme waren bei 0°C noch ausreichend flexibel.

Die Handfestigkeit der Verklebungen wurde nach 10 bis 15 Minuten bei 3°C und nach 1 bis 2 Minuten bei 40°C erreicht. Die Klebstoffe zeigten kein "Fädenziehen" bei üblicher Verarbeitung.

### Vergleichsbeispiel 1

15,2 Masseteile eines Acrylnitril-Butadien-Copolymeren mit einem Acrylnitrilgehalt von 26,7% und einer Mooney-Viskosität von 65 wurden in 9,1 Masseteilen Methacrylsäure, 10 Masseteilen Laurylmethacrylat und 41,0 Masseteilen Methylmethacrylat gelöst und nach vollständiger Lösung 24,7 Masseteile von HEMA-TDMI (Fa. Röhm), einem Umsetzungsprodukt von Trimethylhexylen-1,6-diisocyanat und 2-Hydroxyethylmethacrylat, zugegeben.

Die hergestellte Masse hatte einen stechenden Geruch und zeigte eine schnelle Hautbildung. Das "Fädenziehen" war deutlich ausgeprägt. Die A/B-Verarbeitung und die Eigenschaftsermittlung wurden analog den Beispielen 1 bis 8 durchgeführt.

Die Zugscherfestigkeitswerte zeigen eine deutliche Abhängigkeit von der Temperatur der Verklebung (14,7 N/mm² bei 3°C und 20,7 N/mm² bei 40°C). Der Klebfilm war bei 0°C spröde und brach bei einem Biegeversuch sofort.

### III. Beispiele 9 - 15

In einer weiteren Versuchsreihe wurden die in Tabelle 4 zusammengestellten Klebstofflösungen, wie vorstehend beschrieben, hergestellt.

Die in Tabelle 4 beschriebenen erfindungsgemäßen Zubereitungen wurden mit jeweils 0,60 Masseprozent einer 80%-igen Lösung von Cumolhydroperoxid in Cumol und mit 0,25 Masseprozent 2,6-Di-tert.-butyl-4-methyl-phenol versetzt.

Diese peroxidhaltigen Massen wurden nach dem Oberflächenaktivatorverfahren ausgehärtet.

Zur Bereitung des Oberflächenaktivators wurden 5,1 g eines Kondensationsproduktes aus 1 Mol Anilin und 3,1 Mol Butyraldehyd in 94,9 g Aceton gelöst und der Lösung 0,001 g Kupfernaphthenat hinzugefügt.

Sandgestrahlte Aluminiumprüfstreifen wurden mit dieser Aktivatorlösung bestrichen, nach Ablüftung des Acetons wurden die peroxidhaltigen Zubereitungen auf einen der Aluminiumstreifen aufgetragen und mit einer Überlappung von 12 mm sofort gefügt.

Die Bestimmung der Zugscherfestigkeit erfolgte in Anlehnung an die DIN 53283. Die Ergebnisse enthält Tabelle 5.

Die Klebstoffe gemäß den Patentbeispielen 9 bis 15 besaßen einen nur schwachen Geruch und hatten eine geringe Reizwirkung. Mit diesen Klebstoffen konnten Klebverbindungen mittlerer bis hoher Festigkeit erzielt werden, wobei im untersuchten Temperaturbereich keine Abhängigkeit der Klebfestigkeit von der Verklebtemperatur festzustellen war.

Die Klebfilme waren auch bei einer Temperatur von 0°C noch ausreichend flexibel.

### Vergleichsbeispiel 2

34,8 Masseteile eines sulfochlorierten, langkettenverzweigten Polyethylens mit einem Chlorgehalt von 42,7 Masseprozent und einem Schwefelgehalt von 1,1 Masseprozent sowie einer mittleren Molmasse (Mw / GPC) von 272.000 g/mol wurden in 8,3 Masseteilen Methacrylsäure, 11,0 Masseteilen 2-Ethylhexylmethacrylat, 1,8 Masseteilen Trimethylolpropantrimethacrylat und 44,1 Masseteilen Methylmethacrylat gelöst.

Die Zubereitung besaß einen stechenden Geruch und zeigte bei der Anwendung eine sehr schnelle Hautbildung.

Die Verarbeitung erfolgte nach dem Oberflächenaktivatorverfahren analog den Beispielen 9 bis 15.

Die Zugscherfestigkeitswerte (12,9 N/mm² bei 3°C und 19,1 N/mm² bei 40°C) zeigen eine deutliche Abhängigkeit von der Temperatur der Verklebung.

Der Klebfilm war bei 0°C spröde.

### IV. Herstellung und Ausprüfung von photopolymerisierbaren Zubereitungen

Durch Zugabe von Photoinitiatoren zu den Zubereitungen gemäß Tabelle 2 und 4 wurden photopolymerisierbare Zubereitungen erhalten.

In Tabelle 6 sind die Zusammensetzungen photopolymerisierbarer Zubereitungen und die Ergebnisse der Verklebung von Körpern der Abmessungen 20 x 20 x 5 mm aus Glas, Aluminium und Polymethylmethacrylat (PMMA) erhalten.

Durch Beschichtung von Glas oder Metallen und anschließende photoinitiierte Polymerisation sind flexible Überzüge mit guter Lösemittelbeständigkeit erzielbar.

Die Aushärtung erfolgte unter einer Lampe, die Licht mit Wellenlängen im Bereich von 400 bis 600 nm emittiert.

Die Aushärtung der Zubereitungen gemäß Tabelle 6 zwischen zwei Polyethylenfolien führte zu flexiblen Filmen.

Bei der Verwendung der Zubereitungen als Verguß- oder Beschichtungsmaterialien trat eine nur geringe Oberflächenklebrigkeit auf.

Die Zubereitungen der Vergleichsbeispiele zeigten nach Zusatz von 0,8 Masseprozent des Photoinitiators p,-n-Butylphenylbisacrylphosphinoxid eine vergleichsweise geringe Reaktivität und führten zu Zugscherfestigkeitswerten unter 10 N/mm².

Die separat hergestellten Filme waren spröde.

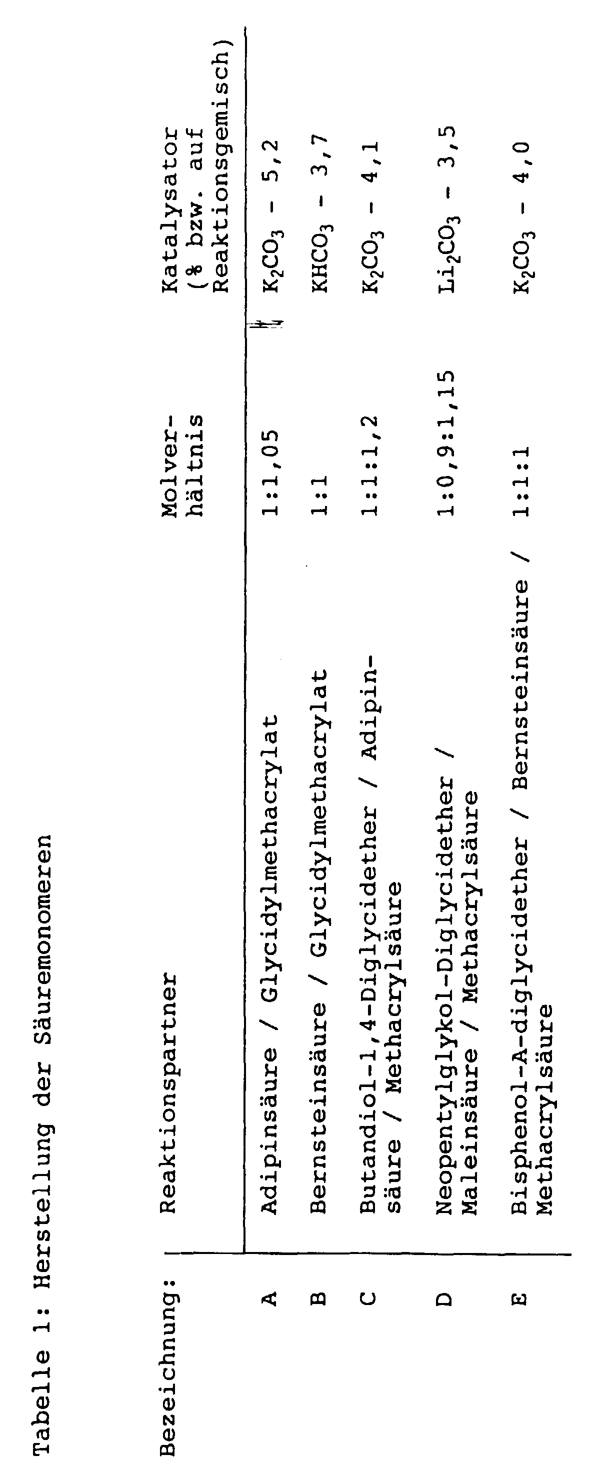

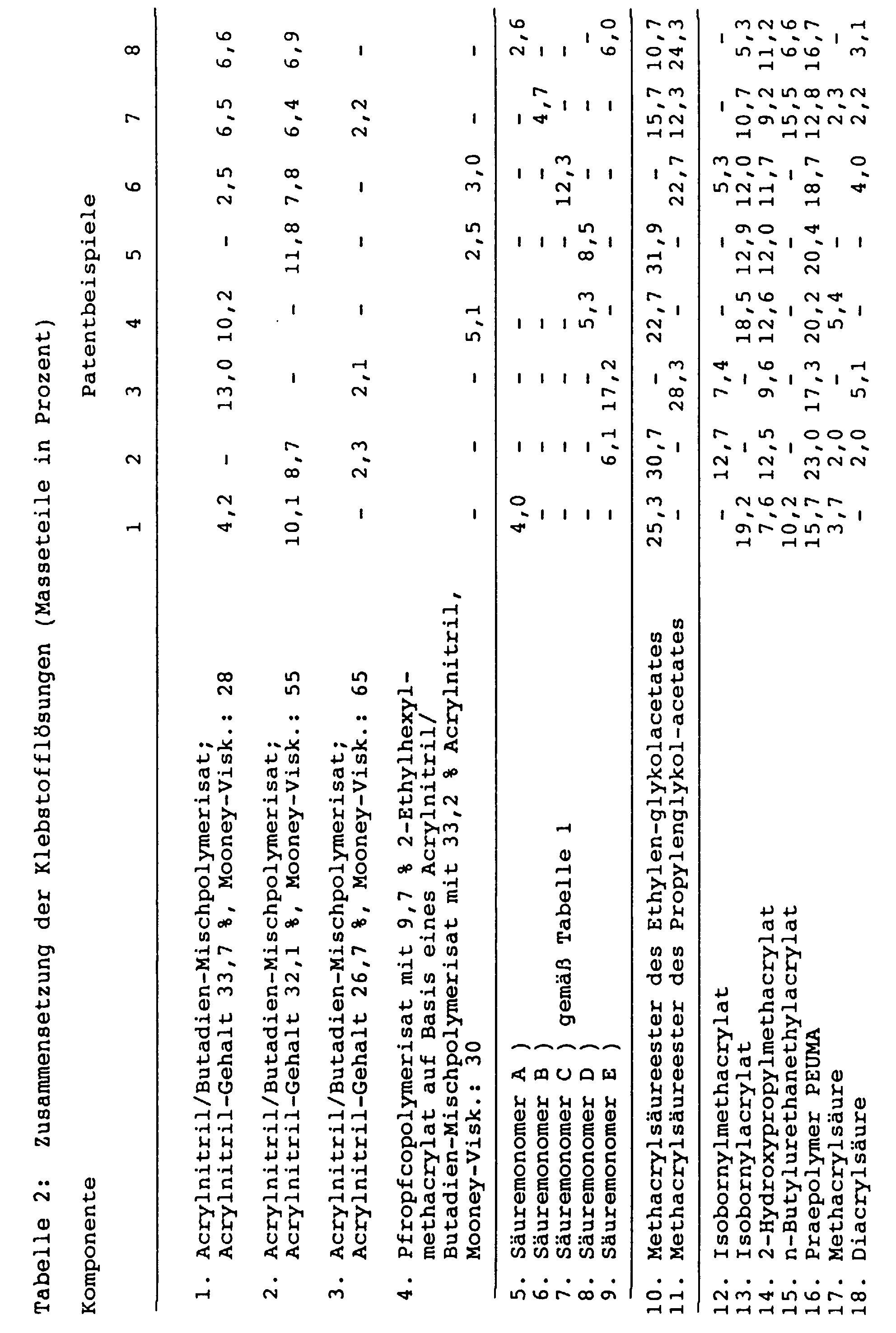

**Tabelle 3:**

| Ergebnisse der Ausprüfungen der Verklebungen von Aluminiumstreifen mit den A/B-Systemen, hergestellt aus den Zubereitungen gemäß Tabelle 2 | | |
|---|---|---|
| Zubereitung nach Patentbeispiel | Zugscherfestigkeitswerte nach DIN 53283 in N/mm², Verklebung durchgeführt | |
| | bei 3°C | bei 40°C |
| 1 | 18,6 | 17,4 |
| 2 | 21,3 | 22,3 |
| 3 | 16,7 | 16,9 |
| 4 | 24,3 | 21,4 |
| 5 | 20,1 | 21,7 |
| 6 | 17,3 | 19,1 |
| 7 | 21,5 | 19,9 |
| 8 | 17,4 | 18,9 |

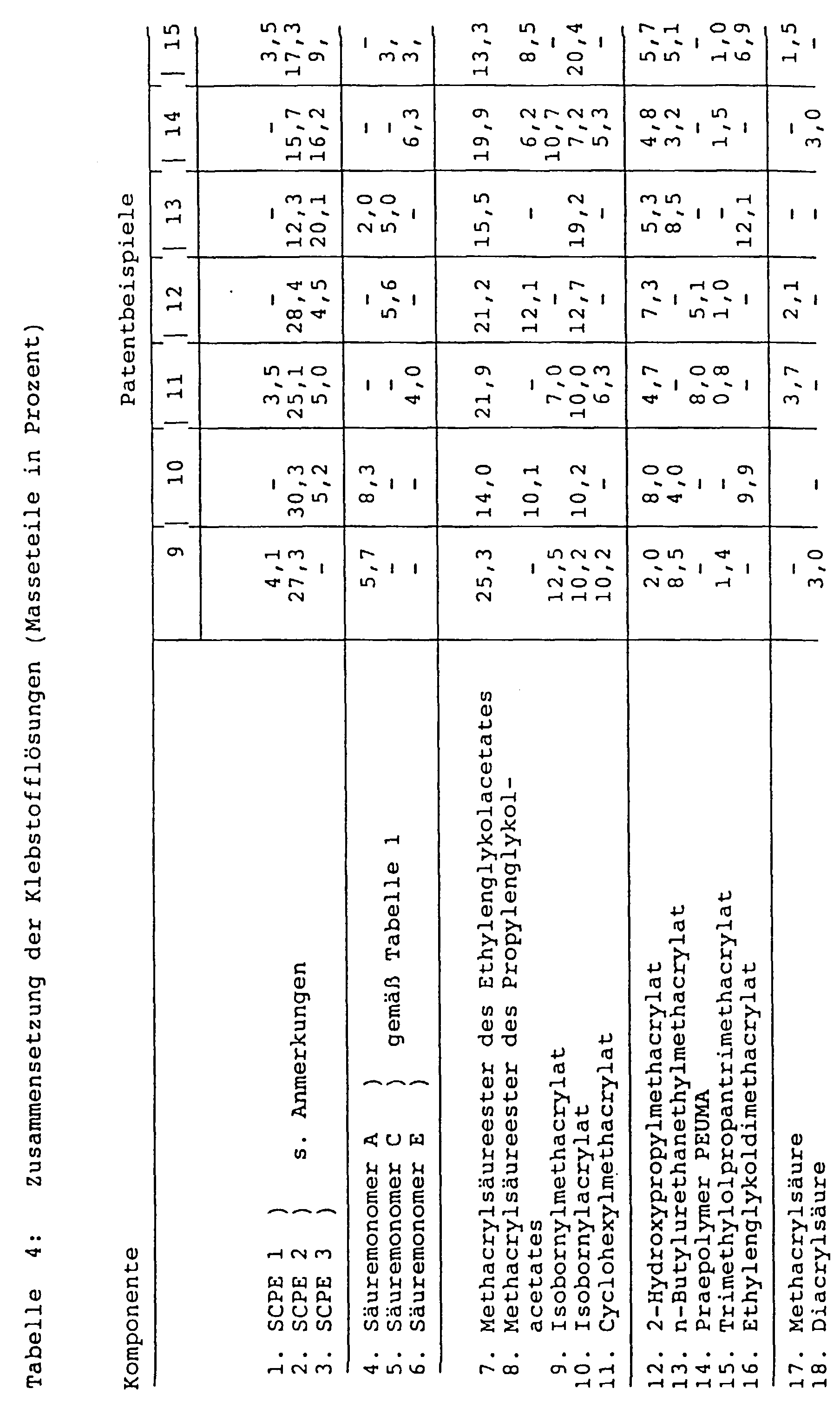

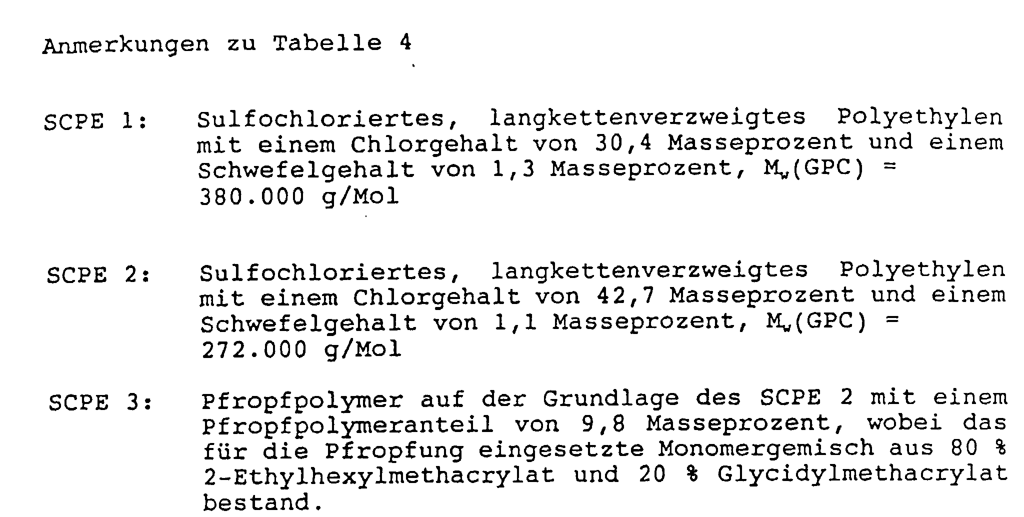

**Tabelle 5:**

| Ergebnisse der Ausprüfungen - Verklebungen von Aluminiumstreifen - mit Oberflächenaktivator - Peroxidhaltige Zubereitungen gemäß Tabelle 4 | | |
|---|---|---|
| | Zugscherfestigkeitswerte in Anlehnung an DIN 53283 in N/mm² | |
| Peroxidhaltige Zubereitungen nach Patentbeispiel | Verklebung bei 3°C | durchgeführt : bei 40°C |
| 9 | 18,6 | 19,2 |
| 10 | 19,3 | 19,1 |
| 11 | 16,1 | 17,6 |
| 12 | 21,2 | 19,1 |
| 13 | 17,9 | 18,2 |
| 14 | 20,1 | 20,9 |
| 15 | 16,3 | 15,9 |

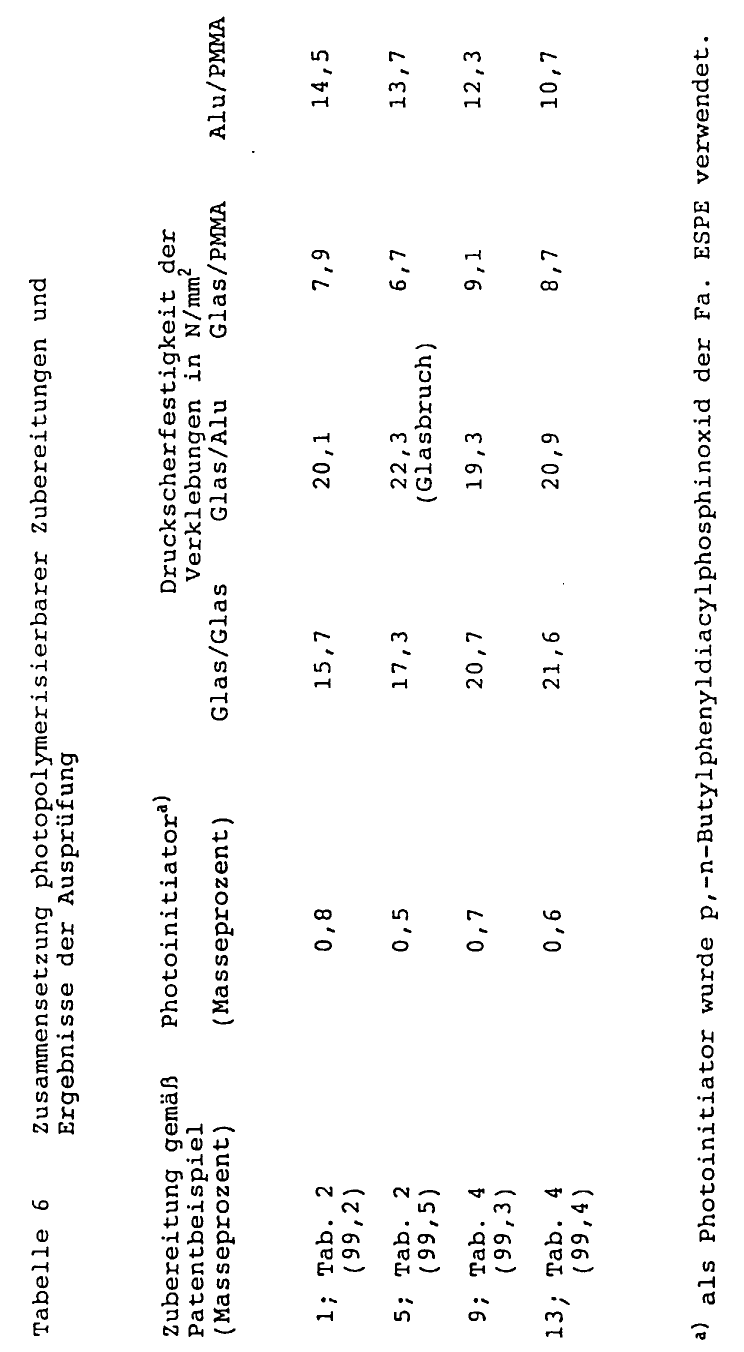

## Patentansprüche

1. Durch radikalische Polymerisation aushärtende geruchsarme (Meth-)acrylatzubereitung aus (Meth-)acrylatmonomeren, Polymeren sowie gegebenenfalls Initiierungssystemen, Modifikatoren und Hilfsstoffen, **dadurch gekennzeichnet**,
- daß die Zubereitung mindestens zwei Polymere umfaßt, die in einem Monomerengemisch, das ein Lösemittel für die Polymeren darstellt, gelöst sind,
- daß die jeweils mindestens zwei Polymere entweder aus der Gruppe der sulfochlorierten Polyethylene oder aus der Gruppe der Acrylnitril/Butadien-Copolymere ausgewählt und die aus der jeweiligen Gruppe ausgewählten Polymere einander ähnlich sind, wobei der Anteil jedes ausgewählten Polymers mindestens 10% der in dem Lösemittel aufzulösenden Gesamtpolymermenge ausmacht,
- und daß das Monomerengemisch, bezogen auf jeweils 100 Masseteile der Zubereitung,
(A) 10 bis 70 Masseteile eines oder mehrerer Ester(meth-) acrylate der allgemeinen Formel (I): 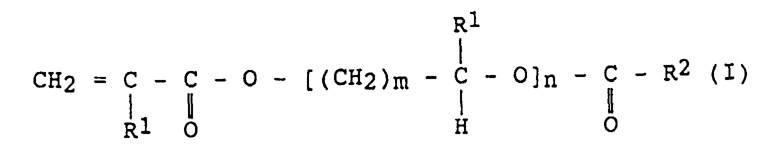 worin
R¹ = H, CH₃
R² = Alkyl, Cycloalkyl, Alkaryl
n = eine ganze Zahl von 1 - 12
m = eine ganze Zahl von 1 - 5
bedeuten;
sowie
(B) 1 bis 20 Masseteile von Säuremonomeren der allgemeinen Formel (II): 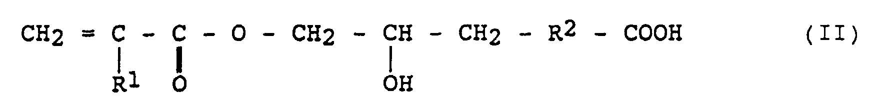 worin R¹ = H, CH₃ 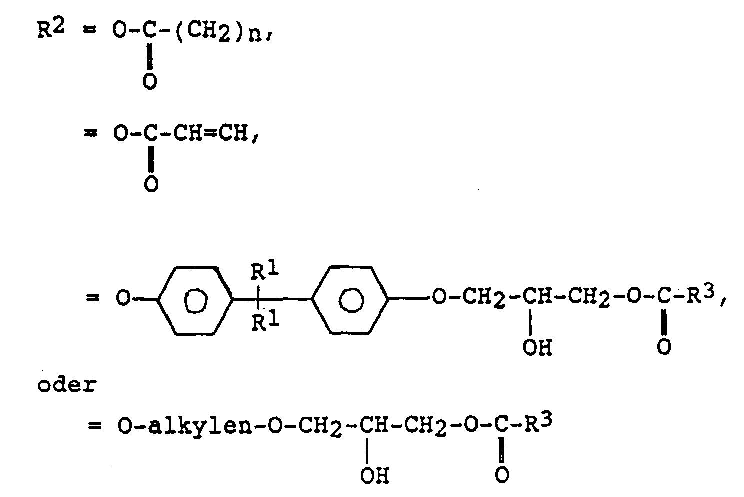
n = eine ganze Zahl von 1 - 12,
R³ = Alkylen, Arylen
bedeuten,
umfaßt.

2. Zubereitung nach Anspruch 1, **dadurch gekennzeichnet**, daß das Monomerengemisch, jeweils bezogen auf 100 Masseteile der Zubereitung, zusätzlich (C) 1 bis 50 Masseteile eines oder mehrerer Urethan(meth-)acrylate der allgemeinen Formel (III): 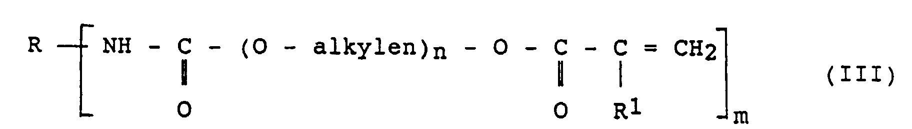 worin
R ein ein- bis vierwertiger, aliphatischer, aromatischer, araliphatischer oder cyclischer Rest,
R¹ = H, CH₃
m = eine ganze Zahl von 1 - 5
bedeuten, und/oder
1 bis 50 Masseteile Alkyl- und/oder Aralkyl(meth-)acrylate mit 6 bis 12 C-Atomen im Alkoholrest und/oder Hydroxyalkyl(meth-)acrylate enthält.

3. Zubereitung nach Anspruch 1 oder 2, **dadurch gekennzeichnet**, daß das Monomerengemisch, bezogen auf 100 Masseteile der Zubereitung, zusätzlich (D) 1 bis 20 Masseteile von weiteren di-, tri- oder tetrafunktionellen (Meth-)acrylatmonomeren mit ggf. alkoxylierten mehrfunktionellen Alkoholkomponenten und/oder von freien (Meth)acrylsäuremonomeren wie Methacrylsäure und Diacrylsäure enthält.

4. Zubereitung nach einem der Ansprüche 1 bis 3, **dadurch gekennzeichnet**, daß das Monomerengemisch 20 bis 50 Masseteile von einem oder mehreren der Ester(meth-)acrylate der Komponente (A) enthält.

5. Zubereitung nach einem der Ansprüche 1 bis 4, **dadurch gekennzeichnet**, daß das Monomerengemisch als Komponente (A) Ester(meth)acrylate des Ethylenglykols und/oder Propylenglykols enthält.

6. Zubereitung nach einem der Ansprüche 1 bis 5, **dadurch gekennzeichnet**, daß das Monomerengemisch als Komponente (B) Säuremonomere enthält, die Umsetzungsprodukte von Bernsteinsäure und/oder Adipinsäure mit Glycidyl(meth-)acrylat sind.

7. Zubereitung nach einem der Ansprüche 1 bis 5, **dadurch gekennzeichnet**, daß das Monomerengemisch als Komponente (B) Säuremonomere enthält, die Umsetzungsprodukte von Diglycidethern und aliphatischen Dicarbonsäuren sowie Methacrylsäure und/oder Diacrylsäure sind.

8. Zubereitung nach einem der Ansprüche 1 bis 7, **dadurch gekennzeichnet**, daß die Polymere Acrylnitril/Butadien-Copolymere sind, die sich um mindestens 15 Einheiten der Mooney-Viskosität bei gleichem Acrylnitrilgehalt oder mindestens um eine Differenz im Acrylnitrilgehalt von 7 Masseprozent im Bereich von 25 bis 45 Masseprozent Acrylnitril oder um mindestens 15 Einheiten der Mooney-Viskosität und mindestens einer Differenz im Acrylnitrilgehalt von 7 Masseprozent unterscheiden.

9. Zubereitung nach einem der Ansprüche 1 bis 7, **dadurch gekennzeichnet**, daß die Polymere sulfochlorierte, langkettenverzweigte Polyethylene sind, die außerdem chloriert sind und die sich hinsichtlich ihrer Molmasse um mindestens 100.000 g/mol unterscheiden, wobei der Schwefelgehalt im Bereich von 1,0 bis 1,35 Masseprozent und der Chlorgehalt im Bereich von 25 bis 45 Masseprozent liegt.

10. Zubereitung nach einem der Ansprüche 1 bis 7, **dadurch gekennzeichnet**, daß die Polymere sulfochlorierte Polyethylene sind, die sich bei Molmassen im Bereich von 200.000 bis 450.000 um mindestens 0,2 Masseprozent im Schwefelgehalt und/oder um mindestens 10 Masseprozent im Chlorgehalt unterscheiden.

11. Verwendung der Zubereitungen gemäß einem der Ansprüche 1 bis 10 zum Verkleben, Beschichten, Vergießen und Abdichten von Substraten.

## Claims

1. A low-odour (meth)acrylate preparation hardening by radical polymerisation and consisting of (meth)acrylate monomers, polymers and, optionally, initiation systems, modifiers and auxiliary agents, characterised in that
- the preparation comprises at least two polymers dissolved in a monomer mixture constituting a solvent for the polymers,
- the at least two polymers are selected either from the group of sulphochlorinated polyethylenes or from the group of acrylonitrile/butadiene copolymers, and the polymers selected from the respective group are similar to one another, wherein the proportion of each selected polymer is at least 10% of the total polymer quantity to be dissolved in the solvent,
- and the monomer mixture, in each case relative to 100 parts by mass of the preparation, comprises
(A) 10 to 70 parts by mass of one or more ester (meth)acrylates of the general formula (I): 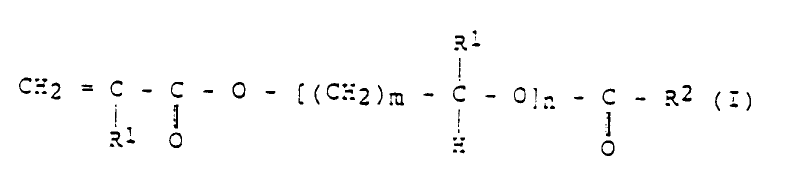 wherein
R¹ = H, CH₃
R² = alkyl, cycloalkyl, alkaryl
n = a whole number from 1 - 12
m = a whole number from 1 - 5
and
(B) 1 to 20 parts by mass of acid monomers of the general formula (II): 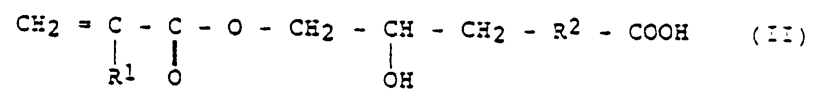 wherein R¹ = H, CH₃ 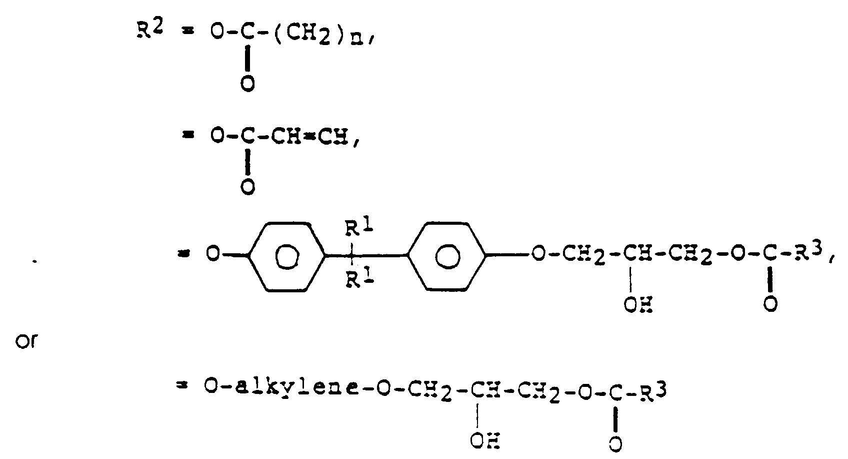
n = a whole number from 1 - 12
R³ = alkylene, arylene.

2. A preparation according to claim 1, characterised in that the monomer mixture, in each case relative to 100 parts by mass of the preparation, additionally contains (C) 1 to 50 parts by mass of one or more urethane (meth)acrylates of the general formula (III): 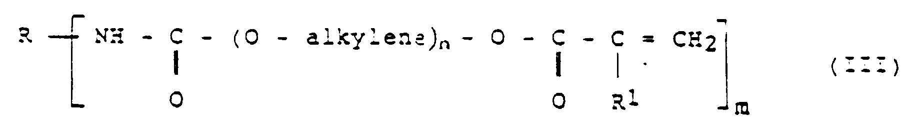 wherein
R = a monovalent to tetravalent, aliphatic, aromatic, araliphatic or cyclic residue,
R¹ = H, CH₃
m = a whole number from 1 - 5
and/or
1 to 50 parts by mass alkyl and/or aralkyl (meth)acrylates with 6 to 12 C atoms in the alcohol residue and/or hydroxyalkyl (meth)acrylates.

3. A preparation according to claim 1 or 2, characterised in that the monomer mixture, relative to 100 parts by mass of the preparation, additionally contains (D) 1 to 20 parts by mass of further di-, tri- or tetrafunctional (meth)acrylate monomers with, optionally, alkoxylated multi-functional alcohol components and/or free (meth)acrylic acid monomers such as methacrylic acid and diacrylic acid.

4. A preparation according to any one of claims 1 to 3, characterised in that the monomer mixture contains 20 to 50 parts by mass of one or more of the ester (meth)acrylates of component (A).

5. A preparation according to any one of claims 1 to 4, characterised in that the monomer mixture contains, as component (A), ester (meth)acrylates of ethylene glycol and/or propylene glycol.

6. A preparation according to any one of claims 1 to 5, characterised in that the monomer mixture contains, as component (B), acid monomers being conversion products of succinic acid and/or adipic acid with glycidyl (meth)acrylate.

7. A preparation according to any one of claims 1 to 5, characterised in that the monomer mixture contains, as component (B), acid monomers being conversion products of diglycide ethers and aliphatic dicarboxylic acids and also methacrylic acid and/or diacrylic acid.

8. A preparation according to any one of claims 1 to 7, characterised in that the polymers are acrylonitrile/butadiene copolymers differing by at least 15 units on the Mooney viscosity scale with the same acrylonitrile content, or at least by a difference in the acrylonitrile content of 7 percent by mass in the range of 25 to 45 percent by mass acrylonitrile, or by at least 15 units on the Mooney viscosity scale and at least a difference in the acrylonitrile content of 7 percent by mass.

9. A preparation according to any one of claims 1 to 7, characterised in that the polymers are sulphochlorinated, long-chain branched polyethylenes which are in addition chlorinated and which differ by at least 100,000 g/mol with respect to their molecular mass, the sulphur content lying in the range of 1.0 to 1.35 percent by mass and fhe chlorine content lying in the range of 25 to 45 percent by mass.

10. A preparation according to any one of claims 1 to 7, characterised in that the polymers are sulphochlorinated polyethylenes differing by at least 0.2 percent by mass in their sulphur content and/or by at least 10 percent by mass in their chlorine content with molecular masses in the range of 200,000 to 450,000.

11. Use of the preparations according to any one of claims 1 to 10 for gluing, coating, casting and sealing substrates.

## Revendications

1. Préparation de (meth)acrylate, à faible odeur, durcissant par polymérisation radicalaire, constituée de (meth)acrylates monomères, de polymères et éventuellement de systèmes amorceurs, de modifiants et d'adjuvants, caractérisée en ce que :
- la préparation comporte au moins deux polymères, qui sont dissous dans un mélange de monomères représentant un solvant des polymères,
- les au moins deux polymères sont choisis soit dans le groupe des polyéthylènes sulfochlorés, soit dans le groupe des copolymères acrylonitrile/butadiène, et les polymères choisis dans le groupe concerné sont analogues les uns aux autres, la quantité de chaque polymère choisi représentant au moins 10 % de la quantité totale de polymères qui doit se dissoudre dans le solvant,
- et le mélange de monomères contient, toujours pour 100 parties en masse de la préparation,
(A) de 10 à 70 parties en masse d'un ou plusieurs esters (meth)acrylates de formule générale (I) : 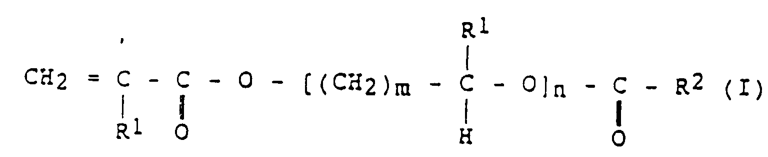 dans laquelle :
R¹ est H, CH₃
R» est un groupe alkyle, cycloalkyle, alkaryle,
n est un nombre entier de 1 à 12,
m est un nombre entier de 1 à 5,
et
(B) de 1 à 20 parties en masse d'acides monomères de formule générale (II) : 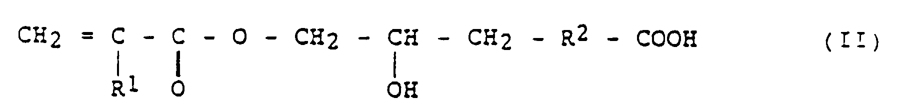 dans laquelle R¹ = H, CH₃ 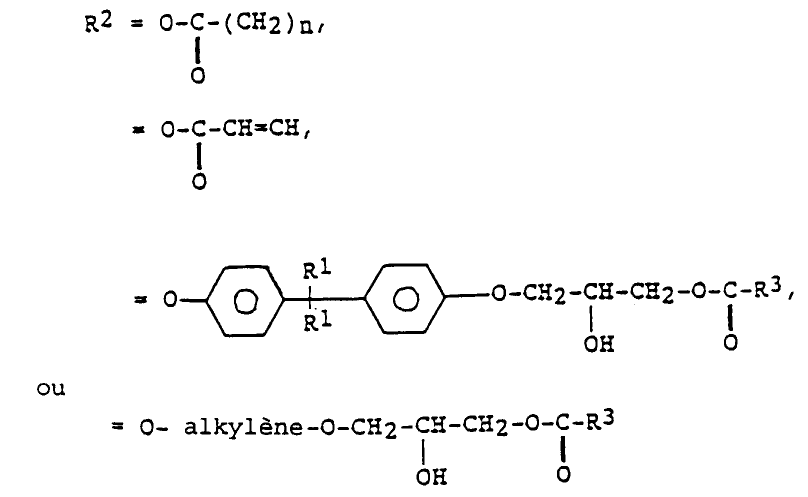
n est un nombre entier de 1 à 12,
R³ est un groupe alkylène, arylène.

2. Préparation selon la revendication 1, caractérisée en ce que le mélange de monomères contient en outre, toujours pour 100 parties en masse de la préparation, (C) de 1 à 50 parties en masse d'un ou plusieurs (meth)acrylates d'uréthanne de formule générale (III) : 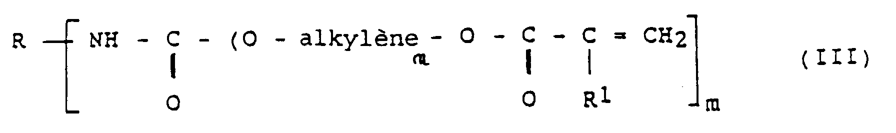 où
R est un radical mono- à tétravalent aliphatique, aromatique, araliphatique ou cyclique,
R¹ est H, CH₃
m est un nombre entier de 1 à 5
et/ou
1 à 50 parties en masse de (meth)acrylates d'alkyle et/ou d'aralkyle ayant de 6 à 12 atomes de carbone dans le fragment alcool, ou encore des (meth)acrylates d'hydroxyalkyle.

3. Préparation selon la revendication 1 ou 2, caractérisée en ce que le mélange de monomères contient en outre, pour 100 parties en masse de la préparation (D) de 1 à 20 parties en masse d'autres (meth)acrylates monomères, di-, tri- ou tétrafonctionnels, comportant éventuellement des constituants polyalcools alcoxylés, et/ou d'acides (meth)acryliques libres monomères, tels que l'acide méthacrylique et l'acide diacrylique.

4. Préparation selon l'une des revendications 1 à 3, caractérisée en ce que le mélange de monomères contient de 20 à 50 parties en masse d'un ou plusieurs des esters (meth)acrylates du constituant (A).

5. Préparation selon l'une des revendications 1 à 4, caractérisée en ce que le mélange de monomères contient en tant que constituant (A) des esters (meth)acrylates de l'éthylèneglycol et/ou du propylèneglycol.

6. Préparation selon l'une des revendications 1 à 5, caractérisée en ce que le mélange de monomères contient en tant que constituant (B) des acides monomères qui sont des produits de la réaction de l'acide succinique et/ou de l'acide adipique avec le (meth)acrylate de glycidyle.

7. Préparation selon l'une des revendications 1 à 5, caractérisée en ce que le mélange de monomères contient en tant que constituant (B) des acides monomères qui sont les produits de la réaction d'éthers de diglycidyle et d'acides dicarboxyliques aliphatiques, ainsi que d'acide méthacrylique et/ou d'acide diacrylique.

8. Préparation selon l'une des revendications 1 à 7, caractérisée en ce que les polymères sont des copolymères acrylonitrile/butadiène, qui se distinguent par au moins 15 unités de viscosité Mooney, pour une teneur en acrylonitrile identique, ou au moins par une différence, au niveau de la teneur en acrylonitrile, de 7 % en masse, dans l'intervalle de 25 à 45 % en masse d'acrylonitrile, ou encore par au moins 15 unités de viscosité Mooney, et au moins une différence de 7 % en masse de la teneur en acrylonitrile.

9. Préparation selon l'une des revendications 1 à 7, caractérisée en ce que les polymères sont des polyéthylènes sulfochlorés à longue chaîne ramifiée, qui en outre sont chlorés et se distinguent, pour ce qui est de leur masse moléculaire d'au moins 100.000 g/mole, la teneur en soufre étant comprise dans l'intervalle de 1,0 à 1,35 % en masse et la teneur en chlore étant comprise dans l'intervalle de 25 à 45 % en masse.

10. Préparation selon l'une des revendications 1 à 7, caractérisée en ce que les polymères sont des polyéthylènes sulfochlorés, qui se distinguent, pour des masses moléculaires comprises dans l'intervalle de 200.000 à 450.000, par au moins 0,2 % en masse de teneur en soufre et/ou par au moins 10 % en masse de teneur en chlore.

11. Utilisation des préparations selon l'une des revendications 1 à 10 pour le collage, l'enduction, l'encapsulage et l'étanchéification de substrats.
